# EUROPEAN PATENT SPECIFICATION

(11) **EP 3 594 835 B1**
(45) Date of publication and mention of the grant of the patent: **27.01.2021**
(21) Application number: 18764206.1
(22) Date of filing: 05.01.2018
(51) Int. Cl.: G06F 21/32, G06K 9/00, G06F 21/45, H04L 29/06

(54) **CONTACTLESS MULTIPLE BODY PART RECOGNITION METHOD AND MULTIPLE BODY PART RECOGNITION DEVICE, USING MULTIPLE BIOMETRIC DATA**
KONTAKTLOSES VERFAHREN ZUR ERKENNUNG MEHRERER KÖRPERTEILE UND VORRICHTUNG ZUR ERKENNUNG MEHRERER KÖRPERTEILE UNTER VERWENDUNG MEHRERER BIOMETRISCHER DATEN
PROCÉDÉ DE RECONNAISSANCE SANS CONTACT DE MULTIPLES PARTIES DU CORPS ET DISPOSITIF DE RECONNAISSANCE DE MULTIPLES PARTIES DU CORPS, UTILISANT DES DONNÉES BIOMÉTRIQUES MULTIPLES

(30) Priority: 10.03.2017 KR 20170030420
(43) Date of publication of application: 15.01.2020
(73) Proprietor: Crucialtec Co., Ltd., Seongnam-si, Gyeonggi-do 13486 (KR); Crucialtrak, Inc, Seongnam-si, Gyeonggi-do 13486 (KR)
(72) Inventor: OH, Dong Hyun, Seoul 01169 (KR); HAN, Yong Hee, Gwangju-si Gyeonggi-do 12772 (KR); LEE, Dong Ho, Seongnam-si Gyeonggi-do 13556 (KR)
(74) Representative: M. Zardi & Co S.A.
(86) International application number: PCT/KR2018/000259
(87) International publication number: WO 2018/164363

(56) References cited:
- JP-A- 2016 040 684
- KR-A- 20090 113 141
- KR-A- 20130 054 767
- KR-A- 20150 091 683
- KR-B1- 101 540 890
- US-A1- 2001 026 632
- US-A1- 2017 039 357
- GOH KAH ONG MICHAEL ET AL: "A contactless biometric system using multiple hand features", JOURNAL OF VISUAL COMMUNICATION AND IMAGE REPRESENTATION, vol. 23, no. 7, 1 October 2012 (2012-10-01), pages 1068-1084, XP055149117, ISSN: 1047-3203, DOI: 10.1016/j.jvcir.2012.07.004

## Description

### TECHNICAL FIELD

The present invention relates to a contactless multiple body part recognition method using multiple biometric data and a multiple body part recognition device, and more specifically, to a contactless multiple body part recognition method using multiple biometric data and a multiple body part recognition device, which can enhance the success rate and speed of recognizing biometric data using a multiple body part recognition technique of acquiring a plurality of biometric data and performing user identification.

### BACKGROUND ART

Generally, a body part recognition technique is a technique of measuring physical or behavioral characteristics of a living person using an automated device and utilizing the characteristics as a personal identification means.

Body part recognition may be divided into physical characteristic recognition and behavioral characteristic recognition. The physical characteristic recognition includes fingerprint recognition, face recognition, iris recognition, vein recognition, retina recognition, hand geometry recognition and the like, and the behavioral characteristic recognition includes voice recognition, gait recognition, signature recognition and the like.

Particularly, the physical characteristic recognition among the body part recognition has been developed from a time relatively long before and is utilized as a security technique in various fields such as finance, access control, medical welfare, public affairs, quarantine, entertainment and the like.

Recently, security techniques using a plurality of physical characteristic recognition devices are used to raise security level. Representatively, security techniques using a fingerprint recognition device and a palm vein recognition device are used.

However, when a plurality of physical characteristic recognition devices is used as described above, there is a problem in that the devices are individually installed and occupy a large area of the skin, and in addition, since the user should separately perform a recognition process for each of the devices, the process is complicated, and a long time is required for authentication.

Since fingerprint recognition is configured in a structure in which a user directly touches a finger on the surface of a device, some users show psychological resistance when a plurality of users uses the same device.

Meanwhile, conventional contactless fingerprint recognition techniques for recognizing fingerprints of a user without contact are developed to solve the problems described above. It is a technique of identifying a user by acquiring fingerprint images of the user using a camera before the user touches a device.

The contactless fingerprint recognition technique like this identifies a user by photographing a plurality of fingerprints of the user using a camera when a hand of the user approaches the device, acquiring a plurality of fingerprint images, selecting one of the acquired fingerprint images on the basis of previously set selection criteria, and comparing the selected fingerprint image with previously stored biometric information (fingerprint information) of the user.

However, since the conventional contactless fingerprint recognition technique performs a process of acquiring a plurality of fingerprint images and selecting one of the acquired fingerprint images on the basis of a previously set algorithm, much time is consumed for user authentication.

In addition, since the conventional contactless fingerprint recognition techniques do not compare all the acquired fingerprint images with previously stored biometric information of the user, but perform the identification by comparing only the image arbitrarily selected on the basis of previously set selection criteria, although a best fingerprint image is selected, it is recognized as an inappropriate image in the user identification process, and the user identification is highly probable to fail.

In addition, since the same process should be repeatedly performed when the user identification fails as described above, waiting time of the user is extended and gives users inconvenience. US 2001/026632 A1 discloses a system including: a camera unit and an image processing unit for obtaining object images of body parts by scanning, without physical contact; an image display unit for displaying layered images of the body part as scanned and a guide showing the body part in an optimal position; a control unit for extracting biometric characteristic data from object images and sending the data to a verification server after encrypting by an encryption unit; and a communications interface unit. US 2017/039357 A1 discloses a user authentication method including receiving a first input image including information on a first modality; receiving a second input image including information on a second modality; determining at least one first score by processing the first input image based on at least one first classifier, the at least one first classifier being based on the first modality; determining at least one second score by processing the second input image based on at least one second classifier, the at least one second classifier being based on the second modality; and authenticating a user based on the at least one first score, the at least one second score, a first fusion parameter of the at least one first classifier, and a second fusion parameter of the at least one second classifier. An article titled as "A contactless biometric system using multiple hand features" in Volume 23, Issue 7, October 2012, Pages 1068-1084 of 'Journal of Visual Communication and Image Representation' discloses authenticating method according to state of the art.

### DISCLOSURE OF INVENTION

### TECHNICAL PROBLEM

Therefore, the present invention has been made in view of the above problems, and it is an object of the present invention to provide a contactless multiple body part recognition method using multiple biometric data and a multiple body part recognition device, which can combine and simultaneously process individual body part recognition techniques and prevent problems such as time consumption, inconveniences, psychological resistance and the like which may occur in the process of registering or identifying biometric information of a user.

Another object of the present invention is to provide a contactless multiple body part recognition method using multiple biometric data and a multiple body part recognition device, which can lower the probability of user identification failure and identify a user in a speedy and accurate way by performing user identification, when the biometric data is inputted from the user, by comparing all the biometric data acquired from the body of the user with previously registered biometric data in real-time until the user identification succeeds.

The technical problems to be solved by the present invention are not limited to the technical problems mentioned above, and unmentioned other technical problems may be clearly understood by those skilled in the art from the following descriptions.

### TECHNICAL SOLUTION

To accomplish the above objects, according to one aspect of the present invention, there is provided a contactless multiple body part recognition method comprising the steps of: acquiring a plurality of biometric data from a user in a contactless state when the user is sensed within a preset measurable range, and performing user authentication on each biometric data by comparing the acquired biometric data with previously registered biometric data; and integrating a result of the user authentication on each biometric data and determining the user as an authorized user when the result of the user authentication on each biometric data satisfies a condition set in advance.

The step of acquiring biometric data from a user in a contactless state when the user is sensed within a preset measurable range, and performing user authentication on each biometric data by comparing the acquired biometric data with previously registered biometric data may include the steps of: acquiring biometric data on the fingerprint from the user and comparing the acquired biometric data with the previously registered biometric data; and acquiring biometric data on the palm vein from the user and comparing the acquired biometric data with the previously registered biometric data, wherein the step of acquiring biometric data on the fingerprint from the user and comparing the acquired biometric data with previously registered biometric data and the step of acquiring biometric data on the palm vein from the user and comparing the acquired biometric data with the previously registered biometric data may be performed at the same time.

The step of acquiring biometric data on the fingerprint from the user and comparing the acquired biometric data with previously registered biometric data may include the steps of: acquiring one piece of fingerprint data from the user; extracting feature points from the one piece of fingerprint data; comparing the feature points extracted from the one piece of fingerprint data with feature points extracted from the previously registered biometric data in real-time; and determining whether or not the user authentication on the fingerprint is successful on the basis of a result of the comparison between the feature points.

The one piece of fingerprint data may be configured of a plurality of group fingerprint information including fingerprint information on at least one or more fingers.

The step of comparing the feature points extracted from the one piece of fingerprint data with feature points extracted from the previously registered biometric data in real-time may be set to additionally acquire one piece of fingerprint data from the user when the matching ratio of the feature points extracted from the one piece of fingerprint data to the feature points extracted from the previously registered biometric data is lower than a preset reference value.

The step of acquiring biometric data on the fingerprint from the user and comparing the acquired biometric data with previously registered biometric data may further include the step of comparing the number of times of additionally acquiring one piece of fingerprint data from the user with a preset number.

The step of determining whether or not the user authentication on the fingerprint is successful on the basis of a result of the comparison between the feature points may determine that the user authentication on the fingerprint is successful when the matching ratio of the feature points extracted from the one piece of fingerprint data to the feature points extracted from the previously registered biometric data is equal to or higher than the preset reference value, and determine that the user authentication on the fingerprint is failed when the matching ratio of the feature points extracted from the face image data to the feature points extracted from the previously registered biometric data is lower than the preset reference value.

The step of acquiring biometric data on the palm vein from the user and comparing the acquired biometric data with previously registered biometric data may include the steps of: acquiring palm vein data from the user; extracting feature points from the palm vein data; comparing the feature points extracted from the palm vein data with feature points extracted from the previously registered biometric data in real-time; and determining whether or not the user authentication on the palm vein is successful on the basis of a result of the comparison between the feature points.

The step of integrating a result of the user authentication on each biometric data and determining the user as an authorized user when the result of the user authentication on each biometric data satisfies an authentication condition set in advance may include the steps of: confirming whether a result of successful user authentication matches a user authentication condition set in advance; and determining whether or not the user is authenticated according to whether a result of successful user authentication matches a user authentication condition set in advance.

According to another aspect of the present invention, there is provided a multiple body part recognition device comprising: a biometric data input unit for acquiring, when a user approaches, a plurality of biometric data on a fingerprint and a palm vein from the body of the user while the body of the user is in a contactless state; and a biometric data identification unit for performing user authentication by comparing the plurality of biometric data acquired from the biometric data input unit with previously registered biometric data.

The biometric data identification unit may individually perform authentication on each biometric data by simultaneously comparing the plurality of biometric data with previously registered biometric data, and determine whether or not the user is authenticated by integrating a result of the authentication on each biometric data.

In authenticating the biometric data on the fingerprint, the biometric data input unit may transmit the biometric data on the fingerprint acquired from the body of the user to the biometric data identification unit in real-time until the biometric data on the fingerprint is authenticated by the biometric data identification unit.

The biometric data input unit may include: a fingerprint recognition means provided with a plurality of fingerprint recognition cameras capable of acquiring at least two or more fingerprint data by photographing fingers of the user when the user approaches the biometric data input unit; and a palm vein recognition means provided with a palm vein recognition camera capable of acquiring palm vein data by photographing a palm of the user when the user approaches the biometric data input unit.

The plurality of fingerprint recognition cameras may include: a first fingerprint recognition camera for photographing fingerprints of a predetermined number of fingers among the fingers except the thumb, and a second fingerprint recognition camera for photographing fingerprints of fingers that are not photographed by the first fingerprint recognition camera among the fingers except the thumb.

The multiple body part recognition device may further include: a biometric data registration unit in which biometric data are stored in advance; an ID display unit for displaying a result of identification of the biometric data identification unit as an ID; a control unit for controlling the biometric data input unit, the biometric data identification unit, the biometric data registration unit, and the ID display unit; and an accommodation unit for accommodating the biometric data input unit, the biometric data identification unit, the biometric data registration unit, the ID display unit, and the control unit therein.

### ADVANTAGEOUS EFFECTS

In the embodiments of the present invention, recognition and identification of a plurality of body parts can be simultaneously performed by combining independent body part recognition techniques, and an aesthetically superior and user-friendly user interface can be provided.

In addition, time consumption or inconveniences occurring in the biometric data registration or identification process can be reduced, and psychological resistance occurring in the body part recognition process can be reduced. Particularly, a multiple body part recognition device with reduced resistance or discomfort of a user, as its internal devices are not shown to the user, while having a high biometric information recognition rate, can be provided.

In addition, the probability of user identification failure can be lowered, and speedy user identification can be accomplished as the user identification is performed, when a biometric data is inputted from a user, by comparing all the biometric data acquired from the body of the user with previously registered biometric data in real-time until the user identification is successful.

The effects of the present invention are not limited to the effects mentioned above, and it should be understood that all the effects that can be inferred from the configuration of the present invention disclosed in the detailed description or the claims of the present invention are included.

### BRIEF DESCRIPTION OF THE DRAWINGS

FIG. 1 is a configuration view showing a multiple body part recognition device according to an embodiment of the present invention.
FIG. 2 is an exploded perspective view showing a multiple body part recognition device according to an embodiment of the present invention.
FIG. 3 is a combined perspective view showing a multiple body part recognition device according to an embodiment of the present invention.
FIG. 4 is a combined perspective view showing a multiple body part recognition device according to another embodiment of the present invention.
FIG. 5 is a view showing an authentication process of a user approaching a multiple body part recognition device to pass a gate.
FIG. 6 is a view showing the types of fingerprint data that can be acquired from a multiple body part recognition device according to an embodiment of the present invention.
FIGS. 7 to 13 are views showing a flowchart illustrating a contactless multiple body part recognition method using multiple biometric data according to an embodiment of the present invention.

### BEST MODE FOR CARRYING OUT THE INVENTION

Hereinafter, the present invention will be described with reference to the accompanying drawings. However, the present invention may be implemented in various different forms and accordingly is not limited to the embodiments described herein. In addition, the parts unrelated to the description are omitted from drawings to clearly describe the present invention, and like elements are denoted by like reference numerals throughout the specification.

Throughout the specification, when an element is "connected to (contacts with, touched to, combined with)" another element, it includes a case of "indirectly connecting" the elements with intervention of another element therebetween, as well as a case of "directly connecting" the elements. In addition, when an element includes a constitutional element, it means further including another constitutional element, not excluding another constitutional element, as far as an opposed description is not specially specified.

The terms used herein are for the purpose of describing particular embodiments only and are not intended to limit the present invention. As used herein, singular forms are intended to include plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Hereinafter, the embodiments of the present invention will be described in detail with reference to the accompanying drawings.

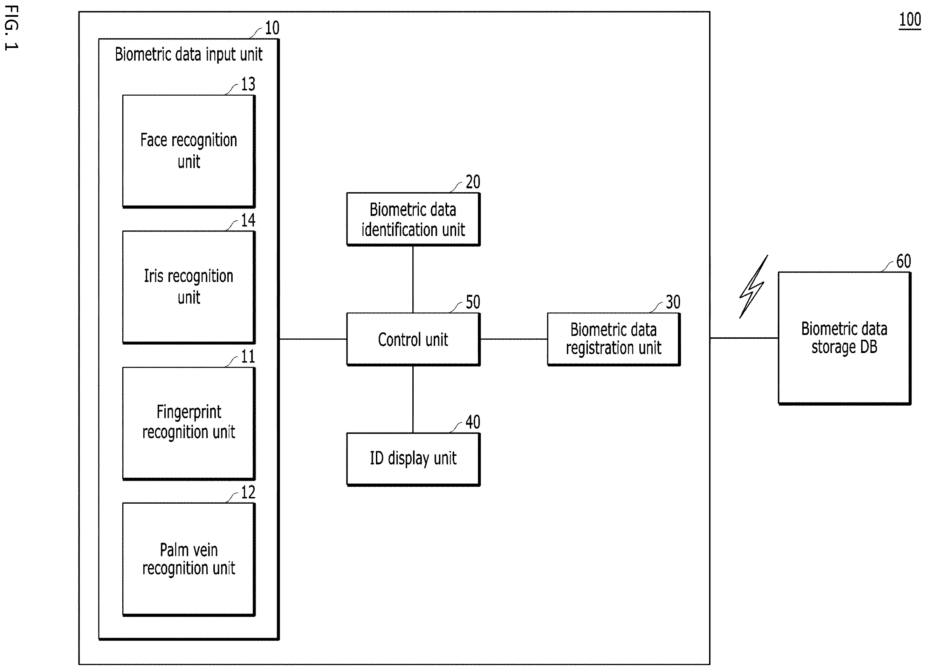

Referring to FIG. 1, a multiple body part recognition device 100 according to an embodiment of the present invention (hereinafter, referred to as a 'multiple body part recognition device 100') is a body part recognition security device for acquiring a plurality of biometric data from a user 1 and identifying the user 1 on the basis of the acquired biometric data when the body of the user 1 approaches in a contactless state, and includes a biometric data input unit 10.

The biometric data input unit 10 acquires a plurality of biometric data from the user 1 approaching the multiple body part recognition device 100.

More specifically, when the user 1 approaches the multiple body part recognition device 100, the biometric data input unit 10 acquires a plurality of biometric data on the fingerprint and palm vein from a body part (e.g., a hand) of the user while the body part of the user is in a contactless state. Here, that the body part of the user 1 is in a "contactless state" means a state in which a body part (e.g., a finger, a palm or the like) of the user 1 is arranged at a recognizable position apart from the multiple body part recognition device 100 without contacting with the multiple body part recognition device 100.

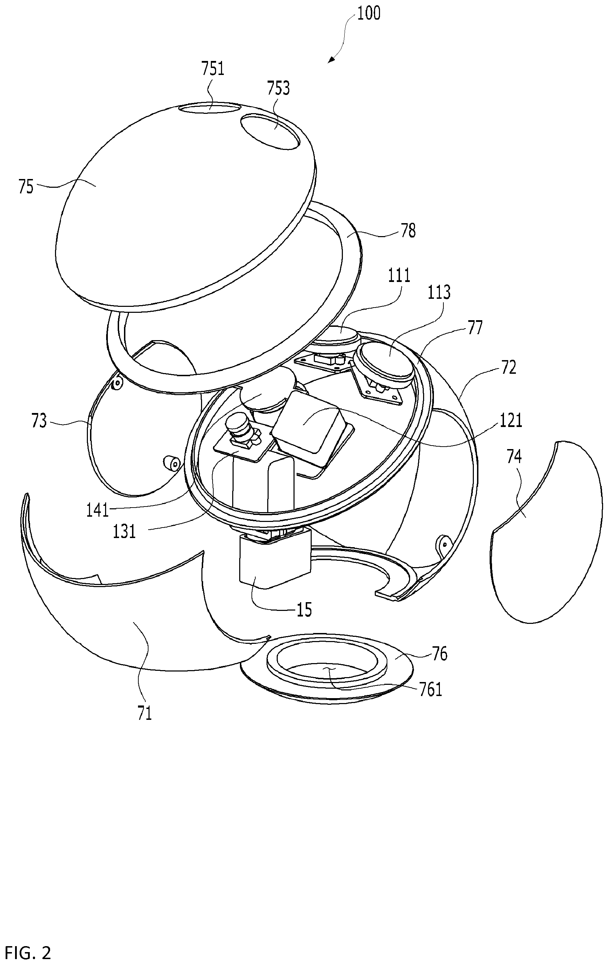

Referring to FIGS. 1 and 2, the biometric data input unit 10 may include a plurality of body part recognition means capable of acquiring biometric data of each body part of the user 1.

More specifically, the biometric data input unit 10 may include a fingerprint recognition means 11 and a palm vein recognition means 12.

When the user 1 approaches the biometric data input unit 10, the fingerprint recognition means 11 may acquire a plurality of fingerprint data from the fingers of the user 1.

The fingerprint recognition means 11 may be provided with a plurality of fingerprint recognition cameras 111 and 113.

When the user 1 approaches the biometric data input unit 10, the plurality of fingerprint recognition cameras 111 and 113 may acquire at least two or more fingerprint data by photographing the fingers of the user 1.

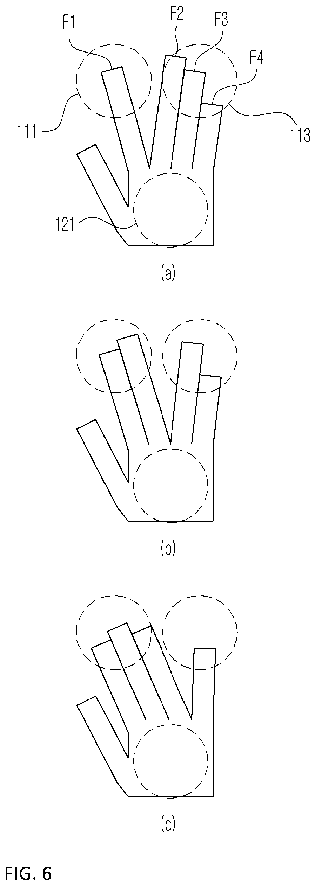

More specifically, the plurality of fingerprint recognition cameras 111 and 113 may include a first fingerprint recognition camera 111 for photographing fingerprints of a predetermined number of fingers except the thumb, and a second fingerprint recognition camera 113 for photographing fingerprints of fingers that are not photographed by the first fingerprint recognition camera 111 among the fingers except the thumb. For example, as shown in FIG. 6(c), when the first fingerprint recognition camera 111 photographs a first finger F1, a second finger F2 and a third finger F3 of the user 1, the second fingerprint recognition camera 113 may photograph the fingerprint of a fourth finger F4. Alternatively, as shown in FIG. 6(a), the first fingerprint recognition camera 111 may photograph only the fingerprint of the first finger F1, and the second fingerprint recognition camera 113 may photograph fingerprints of the second, third and fourth fingers F2, F3 and F4 of the user 1. In addition, as shown in FIG. 6(b), each of the first fingerprint recognition camera 111 and the second fingerprint recognition camera 113 may photograph fingerprints of two fingers. That is, the plurality of fingerprint recognition cameras 111 and 113 may simultaneously photograph fingerprints of four fingers except the thumb of the user 1 in a contactless state, in which a finger of the user is not contact with the multiple body part recognition device 100.

Accordingly, in the multiple body part recognition device 100, authentication of the user 1 can be performed through a plurality of fingerprint information. Here, as described above, the fingerprint recognition means 11 may be a plurality of fingerprint recognition cameras 111 and 113 themselves or may be a module including the plurality of fingerprint recognition cameras 111 and 113 and a processor (not shown) for processing image data acquired by the plurality of fingerprint recognition cameras 111 and 113.

When the user 1 approaches the biometric data input unit 10, the palm vein recognition means 12 may acquire palm vein data from the palm of the user 1.

The palm vein recognition means 12 may be provided with a palm vein recognition camera 121.

When the user 1 approaches the multiple body part recognition device 100, the palm vein recognition camera 121 may acquire palm vein data by photographing a palm of the user 1. Here, as described above, the palm vein recognition means 12 may be the palm vein recognition camera 121 itself or may be a module including the palm vein recognition camera 121 and a processor (not shown) for processing image data acquired by the palm vein recognition camera 121.

Meanwhile, the plurality of fingerprint recognition cameras 111 and 113 and the palm vein recognition camera 121 may be arranged in a triangular shape as shown in FIGS. 2 and 6.

More specifically, when a hand of the user 1 approaches in a contactless state, the plurality of fingerprint recognition cameras 111 and 113 may be arranged at a position relatively higher than the palm vein recognition camera 121 to photograph the fingers of the user 1 positioned at a position relatively higher than the palm. In addition, the palm vein recognition camera 121 may be arranged at a position relatively lower than the plurality of fingerprint recognition cameras 111 and 113 to photograph the palm of the user 1 positioned at a position relatively lower than the fingers.

Accordingly, when the user 1 approaches his fingers to the plurality of fingerprint recognition cameras 111 and 113 to input his or her biometric data into the biometric data input unit 10 of the multiple body part recognition device 100, the palm of the user 1 may be automatically arranged at a position facing the palm vein recognition camera 121.

In addition, when the user 1 approaches the multiple body part recognition device 100, the biometric data input unit 10 may further acquire a plurality of biometric data on the face and the iris from the body of the user while the body of the user is in a contactless state.

More specifically, the biometric data input unit 10 may include a face recognition means 13 and an iris recognition means 14.

When the user 1 approaches the biometric data input unit 10, the face recognition means 13 may acquire face image data from the user 1.

The face recognition means 13 may be provided with a face recognition camera 131.

When the user 1 approaches the multiple body part recognition device 100, the face recognition camera 131 may acquire face image data by photographing the face of the user 1.

More specifically, the face recognition means 13 is arranged at one side of the palm vein recognition camera 121, and when the hand of the user 1 is arranged at a position corresponding to the plurality of fingerprint recognition cameras 111 and 113 and the palm vein recognition camera 121, the face recognition means 13 may be arranged in an area corresponding to the area between the thumb and the index finger of the user 1.

Accordingly, when the user 1 performs identification of the user 1 through the fingerprint recognition means 11, the face recognition means 13 may photograph the face of the user 1 from between the thumb and the index finger of the user 1.

Here, the face recognition means 13 may be the face recognition camera 131 itself or may be a module including the face recognition camera 131 and a processor (not shown) for processing image data acquired by the face recognition camera 131.

When the user 1 approaches the biometric data input unit 10, the iris recognition means 14 may acquire iris data from the user 1.

The iris recognition means 14 may be provided with an iris recognition camera 141.

When the user 1 approaches the multiple body part recognition device 100, the iris recognition camera 141 may acquire iris data by photographing the eyeballs of the user 1.

More specifically, the iris recognition camera 141 is arranged at one side of the palm vein recognition camera 121, together with the iris recognition camera 141, so that when the hand of the user is arranged at a position corresponding to the plurality of fingerprint recognition cameras and the palm vein recognition camera 121, the iris recognition camera 141 may be arranged in an area corresponding to the area between the thumb and the index finger of the user 1.

Accordingly, when the user 1 performs identification of the user 1 through the fingerprint recognition means 11, the iris recognition camera 141 may photograph the iris of the user 1 from between the thumb and the index finger of the user 1. For example, although it is shown in FIG. 2 that the iris recognition camera is arranged on the top of the face recognition camera 131, the positions of the face recognition camera 131 and the iris recognition camera 141 may be changed to each other.

Here, the iris recognition means 14 may be the iris recognition camera 141 itself or may be a module including the iris recognition camera 141 and a processor (not shown) for processing image data acquired by the iris recognition camera 141.

Meanwhile, the face recognition camera 131 and the iris recognition camera 141 may be driven by a pan-tilt driver 15.

More specifically, the iris recognition camera 141 and the face recognition camera 131 may photograph the iris and the face of the user 1 while moving or rotating left and right or up and down by the pan-tilt driver 15 as shown in FIG. 2. For example, the iris recognition camera 141 and the face recognition camera 131 may be driven by the same pan-tilt driver 15 or individually driven by different pan-tilt drivers 15.

That is, the iris recognition camera 141 and the face recognition camera 131 may perform a mechanical (non-optical) zoom-in and zoom-out function by physical movement of the pan-tilt driver 15. Of course, the iris recognition camera 141 and the face recognition camera 131 may perform both a mechanical zooming function and an optical zooming function. Accordingly, when the user 1 is positioned within a range from the multiple body part recognition device 100, which is set to be capable of acquiring biometric data of the user, without the need of intentionally approaching his or her eyes or face to the iris recognition camera 141 or the face recognition camera 131, the iris recognition camera 141 or the face recognition camera 131 may focus on the iris or the face of the user 1 by physical movement of the pan-tilt driver 15, adjust the iris size or the face size of the user 1, and photograph the iris or the face always at a fixed size regardless of distance.

In addition, the multiple body part recognition device 100 includes a biometric data identification unit 20.

Referring to FIG. 1, the biometric data identification unit 20 performs authentication of the user 1 by comparing a plurality of biometric data acquired from the biometric data input unit 10 with previously registered biometric data.

That is, the biometric data identification unit 20 may individually perform authentication on each biometric data inputted from the biometric data input unit 10 by simultaneously comparing two or more biometric data acquired from the biometric data input unit 10 with previously registered biometric data, and determine whether or not the user is authenticated by integrating the result of the authentication on each biometric data. Of course, a time difference may individually occur in the authentication process according to the type or amount of each biometric data of the user 1 registered in advance. In addition, the biometric data identification unit 20 may display the biometric data, starting from a biometric data identified first among the biometric data, to the outside through a display or the like so that a security manager may confirm.

Here, the biometric data identification unit 20 may perform authentication (← verification) of confirming the identity of a user through 1-to-1 matching or perform identification of finding a user 1 from a large number of persons through 1-to-N matching. That is, strictly speaking, authentication and identification are different concepts, which are selectively used according to an application area. However, in the present invention, the terms "authentication" and "identification" generally refer to a process of confirming or finding an identity of a user using biometric data, and it is preferable to interpret the terms in a broad sense.

Meanwhile, when biometric data on the fingerprint is inputted from the user 1, the multiple body part recognition device 100 may compare all the biometric data on the fingerprint acquired from the user 1 with previously registered biometric data in real-time until the user authentication on the fingerprint succeeds.

More specifically, in authenticating the biometric data on the fingerprint, the biometric data input unit 10 may transmit the biometric data on the fingerprint acquired from the body of the user 1 to the biometric data identification unit 20 in real-time, and the biometric data identification unit 20 may perform authentication of the biometric data on the fingerprint by comparing the biometric data on the fingerprint transmitted from the biometric data input unit 10 in real-time with previously registered biometric data, until the biometric data on the fingerprint is authenticated by the biometric data identification unit 20.

That is, the multiple body part recognition device 100 may perform authentication of the user 1 by comparing a piece of currently acquired biometric data with previously registered biometric data, unlike performing authentication of the user 1 by acquiring biometric data on the fingerprint from the user 1, selecting a best biometric data among a plurality of biometric data acquired on the basis of previously set criteria, and comparing the selected biometric data with previously registered biometric data, and the multiple body part recognition device 100 may repeatedly perform this process until the authentication of the user 1 succeeds. Here, success of the authentication of the user 1 means that a result of the comparison between the feature points of currently acquired biometric data and the feature points of the previously registered biometric data matches a reference value set in the system.

Accordingly, after acquiring a plurality of biometric data from the user, the multiple body part recognition device 100 repeatedly performs a process of comparing the acquired biometric data with previously registered biometric data in real-time until the user authentication succeeds, rather than performing the process of selecting one among the plurality of acquired biometric data, and therefore the probability of failure can be lowered in performing the identification of the user 1, and the identification of the user 1 can be accomplished more speedily and accurately.

Referring to FIGS. 1 and 2, the multiple body part recognition device 100 may further include a biometric data registration unit 30, an ID display unit 40, and a control unit 50.

The biometric data registration unit 30 is configured to be connected to the biometric data identification unit 20 through the control unit 50 described below, and biometric data of the user 1 may be registered in advance. Accordingly, the biometric data identification unit 20 may perform identification by comparing the biometric data acquired from the biometric data input unit 10 with the biometric data of the user 1 previously registered in the biometric data registration unit 30.

The ID display unit 40 is configured to be connected to the biometric data identification unit 20 through the control unit 50 and may display a result of identification on the biometric data of the user 1 identified by the biometric data identification unit 20 in terms of an ID. The security manager or the user 1 may confirm an identification result of the ID display unit 40.

The control unit 50 is connected to the biometric data input unit 10, the biometric data registration unit 30, the biometric data identification unit 20, and the ID display unit 40 and performs a function of controlling the operation of those.

In addition, the multiple body part recognition device 100 may further include a biometric data storage database 60.

The biometric data storage database 60 may store the biometric data registered in the biometric data registration unit 30 as a backup. That is, when a problem such as an intentional error, a hardware problem, a software problem, a theft, a computer virus, a cyber-terror, a disaster or the like occurs, the biometric information of the user 1 registered in the biometric data registration unit 30 may be lost. Accordingly, data registered in the biometric data registration unit 30 may be set to be periodically backed up in the biometric data storage database 60.

Here, the biometric data storage database 60 may be used as a tamper production function. That is, when the multiple body part recognition device 100 is separated from an external controller in which the multiple body part recognition device 100 will be installed, all the data registered in the biometric data registration unit 30 can be deleted. Contrarily, when the multiple body part recognition device 100 is connected to the controller again, the data backed up in the biometric data storage database 60 may be restored in the biometric data registration unit 30.

Accordingly, although the multiple body part recognition device 100 is lost due to a reason of theft or the like, loss of biometric data, which is personal information, can be prevented. That is, when the multiple body part recognition device 100 is separated from the external controller, all the data registered in the biometric data registration unit 30 are deleted, and thus the problem of leaking biometric data of the user 1 can be prevented. In addition, when the separated multiple body part recognition device 100 is connected again to the external controller, all the data backed up in the biometric data storage database 60 are restored in the biometric data registration unit 30, and inconvenience of inputting the biometric data again may not occur even when the multiple body part recognition device 100 is separated from the external controller by mistake or for the purpose of repair, management or the like and connected again.

In addition, the multiple body part recognition device 100 may further include an accommodation unit 70.

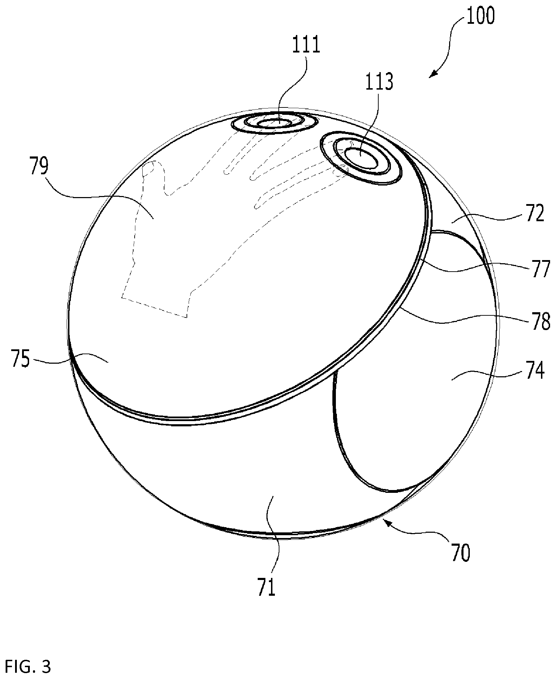

Referring to FIGS. 2 and 3, the accommodation unit 70 may be formed in a structure of accommodating the biometric data input unit 10, the biometric data identification unit 20, the biometric data registration unit 30, the ID display unit 40, and the control unit 50 therein.

More specifically, the accommodation unit 70 may be formed in a sphere shape, and an accommodation space may be formed inside thereof so that the biometric data input unit 10, the biometric data identification unit 20, the biometric data registration unit 30, the ID display unit 40, and the control unit 50 may be accommodated. However, the accommodation unit 70 is not limited to the sphere shape and may be changed and applied in various shapes as needed. For example, the biometric data input unit 10, the biometric data identification unit 20, the biometric data registration unit 30, the ID display unit 40, and the control unit 50 of the separated multiple body part recognition device 100 may be formed in the shape of a module to be accommodated in the accommodation unit 70.

In addition, the accommodation unit 70 may include a plurality of outer layers.

More specifically, the plurality of outer layers may be configured of a front side member 71, a rear side member 72, two side surface members 73 and 74 positioned on both sides, an upper member 75, and a lower member 76.

The front side member 71 and the rear side member 72 are disposed to face each other and may be formed in a curved surface shape to be formed in a sphere shape when they are combined with the side surface members 73 and 74, the upper member 75, and the lower member 76.

The two side surface members 73 and 74 may be installed detachably from the rear side member 72. Accordingly, a system manager may install the body part recognition module inside the accommodation unit 70 or maintain and repair the multiple body part recognition device 100 by opening the side surface members 73 and 74.

The upper member 75 may be attached in an area inclined at a predetermined angle in the vertical direction considering the convenience (accessibility) of the user. Accordingly, when a finger or a palm of the user 1 approaches the multiple body part recognition device 100, the user may maintain a more comfortable posture. For example, the upper member 75 may be formed in a half mirror structure.

In addition, a plurality of through holes 751 and 753 may be formed at one side of the upper member 75 located in an area inclined at a predetermined angle in the vertical direction. The lens unit of the plurality of fingerprint recognition cameras 111 and 113 installed in the accommodation unit 70 may be arranged in the plurality of through holes 751 and 753, respectively.

More specifically, the through holes 751 and 753 may include a first through hole 751 formed at one side to expose one side of the first fingerprint recognition camera 111, and a second penetration hole 753 formed at the other side to expose one side of the second fingerprint recognition camera 113. For example, the first fingerprint recognition camera 111 exposed to the outside through the first through hole 751 photographs fingerprints of a predetermined number of fingers among the fingers except the thumb, and the second fingerprint recognition camera 113 exposed to the outside through the second penetration hole 753 photographs fingerprints of fingers that are not photographed by the first fingerprint recognition camera 111 among the fingers except the thumb.

The lower member 76 is combined with the front side member 71 and the rear side member 72, and a communication hole 761 communicated with the accommodation space of the accommodation unit 70 may be formed at the center of the lower member 76 to connect the multiple body part recognition device 100 and an external controller.

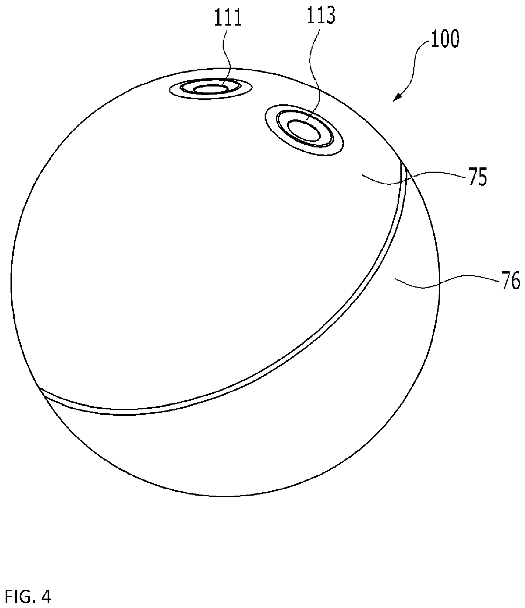

Here, although it is described in the embodiment described above that the accommodation unit 70 is configured of six members, the accommodation unit 70 is not limited thereto and may be changed and applied in more various forms. For example, as shown in FIG. 4, the upper member 75 and the lower member 76 of the accommodation unit 70 may be formed in a hemisphere shape, which are directly coupled and formed in a sphere shape.

In addition, the accommodation unit 70 may further include a fixing member 77.

Referring to FIG. 2, the fixing member 77 is formed in a ring shape and may be combined with the front side member 71, the rear side member 72, the side surface members 73 and 74, and the upper member 75, except the lower member 76. Here, a light source 78 of a ring shape may be installed between the upper member 75 and the fixing member 77. The light source 78 may have a functional effect of inducing a finger or a palm of the user 1, in addition to a decorative or aesthetical effect.

In addition, the accommodation unit 70 may further include a guide unit 79.

Referring to FIG. 4, the guide unit 79 showing an approach direction of a finger or a palm of the user 1 may be formed on the accommodation unit 70.

More specifically, the guide unit 79 may be formed on the surface of the upper member 75. Accordingly, the guide unit 79 shows an approach direction of a finger or a palm of the user 1 and may show the approach direction of a finger or a palm of the user 1 in a predetermined (e.g., a visual or tactile) guidance method. Accordingly, a finger or a palm of the user 1 may easily approach the multiple body part recognition device 100. For example, the guide unit 79 may be formed in a shape displaying a finger or a palm using the light source 78 or a transparent ink. In addition, the guide unit 79 may be displayed in a separate color or formed in a rough surface shape. In addition, an air discharge unit is provided in a portion where a finger or palm shape is displayed so that the user 1 may sense wind and is induced to approach the multiple body part recognition device 100. However, the guide unit 79 is not limited to the embodiment described above and may be changed and applied in various forms within a condition capable of implementing the same function.

Hereinafter, an entrance system using the multiple body part recognition device 100 will be described.

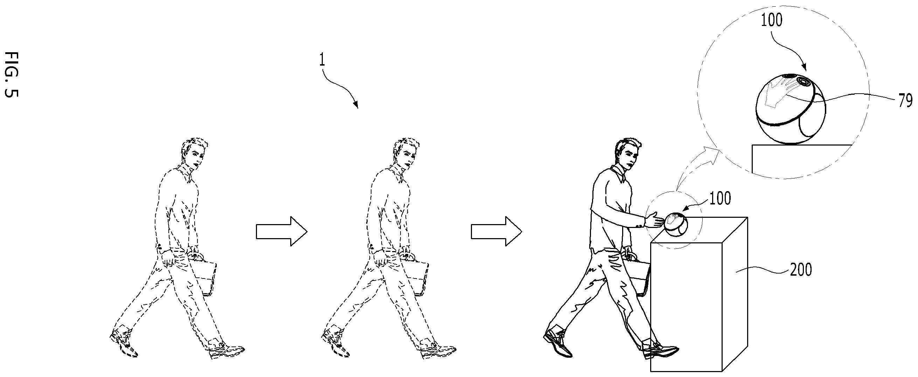

Referring to FIG. 5, an entrance system using the multiple body part recognition device 100 includes the multiple body part recognition device 100 as described above and a gate 200 for distinguishing a user 1 identified by the multiple body part recognition device 100 and permitting the user 1 to enter. For example, the gate 200 may be a means for physically controlling entrance of a user 1, such as a swing door or a sliding door, and its structure and shape are not specially limited.

Accordingly, the user 1 should prove the identity of the user 1 through the multiple body part recognition device 100 to pass through the gate 200, and when the process of authenticating the user 1 by the multiple body part recognition device 100 is completed, the user 1 may pass through the gate 200.

More specifically, the user 1 provides the multiple body part recognition device 100 with his or her biometric information to pass through the gate 200, and the multiple body part recognition device 100 may perform identification by comparing the biometric data acquired from the user 1 with previously registered biometric data of the user 1. For example, the user 1 looks at the multiple body part recognition device 100 while approaching his or her finger or palm to the multiple body part recognition device 100 in a contactless state to provide the multiple body part recognition device 100 with his or her biometric information. Accordingly, the biometric data input unit 10 provided in the multiple body part recognition device 100 may acquire biometric data of the user 1.

At this point, the multiple body part recognition device 100 may set various entrance permission conditions.

First, entrance may be permitted on the basis of any one of biometric data verified first among two or more biometric data. In this case, fast entrance permission is possible.

Next, it is also possible to permit entrance only when two or more biometric data are verified. In this case, the security condition is intensified, and the probability of entrance permission or security accidents by misrecognition is lowered.

In addition, setting of an entrance permission condition appropriately combining these two cases as described above is also possible. For example, when authentication is performed using a vein (palm vein) or an iris having a high accuracy, stability and security level of data, entrance may be permitted on the basis of only one of the biometric data, and alternatively, when authentication is performed using a face image having a comparatively low accuracy and stability level of data, a method of enhancing security by also requesting other biometric data, e.g., authentication based on a fingerprint or an iris, is possible. In addition to this, setting of various entrance permission conditions is possible considering a security request level, an authentication speed or the like.

Here, although the multiple body part recognition device 100 is described in the entrance system using the multiple body part recognition device 100 for the purpose of passing through the gate 200 (entrance security gate 200) for the convenience of explanation, it is not limited thereto and may be applied to all systems related to security.

Hereinafter, a contactless multiple body part recognition method using the multiple biometric data will be described.

For reference, reference symbols used for describing the multiple body part recognition device 100 are used for each configuration for describing the contactless multiple body part recognition method using the multiple biometric data, and duplicated descriptions will be omitted.

First, before describing the contactless multiple body part recognition method using the multiple body part recognition device 100, the process of registering biometric data using the multiple body part recognition device 100 will be described.

Referring to FIG. 1, a user 1 or a manager should register biometric data of the user 1 in the multiple body part recognition device 100. Registration of biometric data of the user 1 is basically a behavior of extracting and storing features of the user 1. All the biometric data of the user 1 acquired in this manner may be stored in the biometric data registration unit 30. All the biometric data of the user 1 registered in the biometric data registration unit 30 may be backup up in the biometric data storage database 60 for preservation of the data. The multiple body part recognition device 100 and the biometric data storage database 60 may be connected wiredly or wirelessly.

Next, the contactless multiple body part recognition method using multiple biometric data will be described.

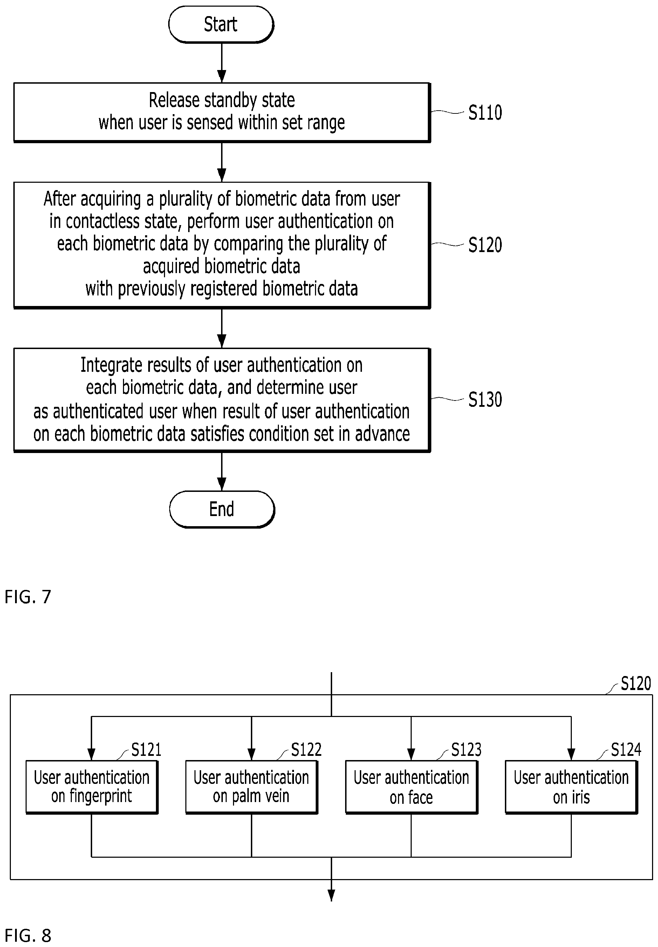

Referring to FIG. 7, when a user 1 is sensed within a preset measurable range, the multiple body part recognition device 100 releases a standby state (step S110).

After the standby state is released, the multiple body part recognition device 100 acquires a plurality of biometric data from the user 1 in a contactless state, and performs user authentication on each biometric data by respectively comparing the acquired biometric data with previously registered biometric data (step S120).

More specifically, referring to FIG. 8, when the user 1 is sensed within a range set in advance, the multiple body part recognition device 100 simultaneously acquires biometric data on the fingerprint and biometric data on the palm vein from the user 1, compares the acquired biometric data with previously registered biometric data (steps S121 and S122) and performs user authentication on each biometric data.

That is, the user authentication on the fingerprint and the user authentication on the palm vein may be simultaneously accomplished.

Here, "simultaneously accomplish" not only means that a plurality of processes is performed in the same period of time, but also means that although there may be a time difference as a plurality of processes is individually processed, the processes are integrated and performed at a time from the aspect of total process.

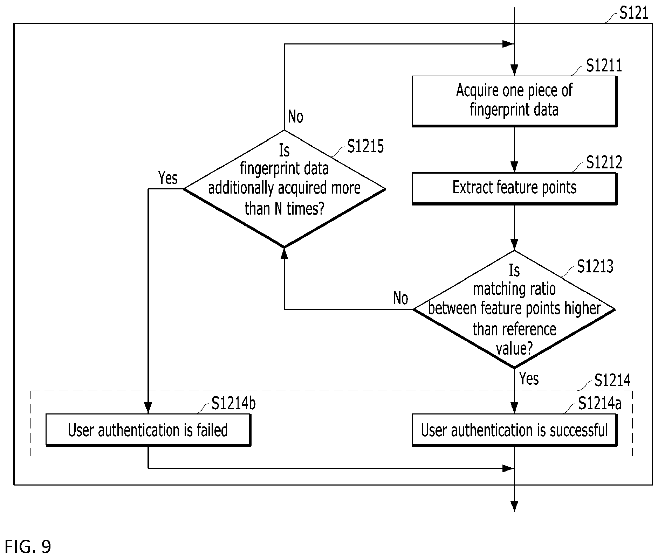

The process of performing user authentication using biometric data on the fingerprint and the palm vein will described in more detail with reference to FIGS. 9 to 10.

Referring to FIG. 9, when body part information of a user 1 is sensed, the multiple body part recognition device 100 performs user authentication on the fingerprint (step S121).

More specifically, when a user 1 is sensed, the multiple body part recognition device 100 acquires one piece of fingerprint data from the user 1 (step S1211) and extracts feature points from the acquired one piece of fingerprint data (step S1212). Then, the multiple body part recognition device 100 compares the feature points extracted from the one piece of fingerprint data with feature points extracted from previously registered biometric data in real-time (step S1213), and determines whether the user authentication on the fingerprint is successful on the basis of a result of the comparison between the feature points (step S1214).

Here, the one piece of fingerprint data may be configured of a plurality of group fingerprint information including fingerprint information on at least one or more fingers.

The plurality of group fingerprint information may be formed of first group fingerprint information acquired from the first fingerprint recognition camera 111 and second group fingerprint information acquired from the second fingerprint recognition camera 113.

Accordingly, the plurality of group fingerprint information may be formed of a first fingerprint data (FIG. 6(a)) including fingerprint information on a first finger F1 and fingerprint information on second to fourth fingers F2, F3 and F4, a second fingerprint data (FIG. 6(b)) including fingerprint information on the first finger and the second finger F1 and F2 and fingerprint information on the third finger and the fourth finger F3 and F4, a third fingerprint data (FIG. 6(c)) including fingerprint information on the first to third fingers F1 to F3 and fingerprint information on the fourth finger F4. However, the plurality of group fingerprint information is not limited to the embodiment described above and may be changed in more various methods.

Meanwhile, as shown in FIG. 9, the multiple body part recognition device 100 is set to additionally acquire one piece of fingerprint data from the user 1 when the feature points extracted from one piece of fingerprint data are compared with the feature points extracted from the previously registered biometric data in real-time (step S1213) and the matching ratio of the feature points extracted from the one piece of fingerprint data to the feature points extracted from the previously registered biometric data is lower than a preset reference value.

That is, the multiple body part recognition device 100 additionally acquires one piece of fingerprint data from the user 1 when the matching ratio between the feature points is lower than a preset reference value. For example, the preset reference value may be randomly set by a manager.

In addition, when it needs to additionally acquire a piece of fingerprint data from the user 1, the multiple body part recognition device 100 compares the number of times of additionally acquiring a piece of fingerprint data from the user with a preset number (step S1215).

Accordingly, when the feature points extracted from one piece of fingerprint data are compared with the feature points extracted from the previously registered biometric data in real-time (step S1213) and the matching ratio of the feature points extracted from the one piece of fingerprint data to the feature points extracted from the previously registered biometric data is equal to or higher than a preset reference value, the multiple body part recognition device 100 determines that the user authentication on the fingerprint is successful (step S1214a). Contrarily, when it needs to additionally acquire one piece of fingerprint data from the user 1, the multiple body part recognition device 100 compares the number of times of additionally acquiring one piece of fingerprint data with a preset number (step S1215), and when the number of times of additionally acquiring one piece of fingerprint data from the user 1 is equal to or larger than the preset number, the multiple body part recognition device 100 determines that the user authentication is failed (step S1214b).

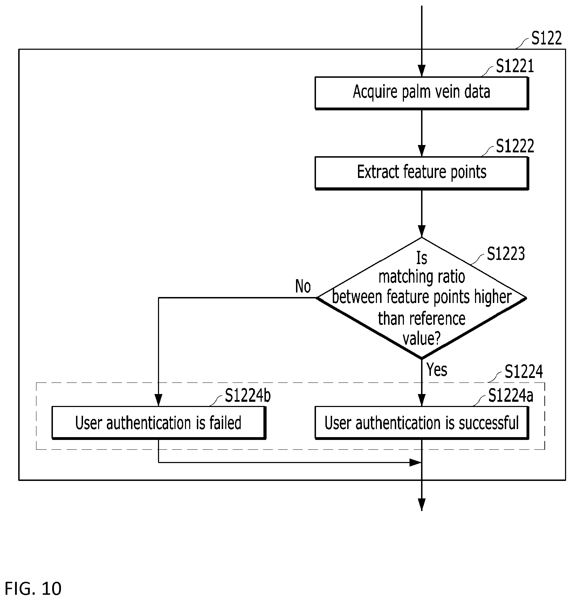

Referring to FIG. 10, when body part information of a user 1 is sensed, the multiple body part recognition device 100 simultaneously performs user authentication on the fingerprint (step S121) and user authentication on the palm vein (step S122).

More specifically, when body part information of a user 1 is sensed, the multiple body part recognition device 100 acquires palm vein data from the user 1 (step S1221) and extracts feature points from the acquired palm vein data (step S1222). Then, the multiple body part recognition device 100 compares the feature points extracted from the palm vein data with feature points extracted from previously registered biometric data (step S1223) and determines whether the user authentication on the palm vein is successful on the basis of a result of the comparison between the feature points (step S1224).

Accordingly, when the feature points extracted from palm vein data are compared with the feature points extracted from the previously registered biometric data (step S1223) and the matching ratio of the feature points extracted from the palm vein data to the feature points extracted from the previously registered biometric data is equal to or higher than a preset reference value, the multiple body part recognition device 100 determines that the user authentication on the palm vein is successful (step S1224a), and contrarily, when the matching ratio of the feature points extracted from the palm vein data to the feature points extracted from the previously registered biometric data is lower than the preset reference value, the multiple body part recognition device 100 determines that the user authentication on the palm vein is failed (step S1224b).

In addition, when the user 1 is sensed within a range set in advance, the multiple body part recognition device 100 may simultaneously acquire biometric data on the face and biometric data on the iris from the user 1, compare the acquired biometric data with previously registered biometric data (steps S123 and S124), and further perform user authentication on each biometric data.

That is, user authentication on the face and user authentication on the iris may be simultaneously performed together with the user authentication on the fingerprint and the user authentication on the palm vein.

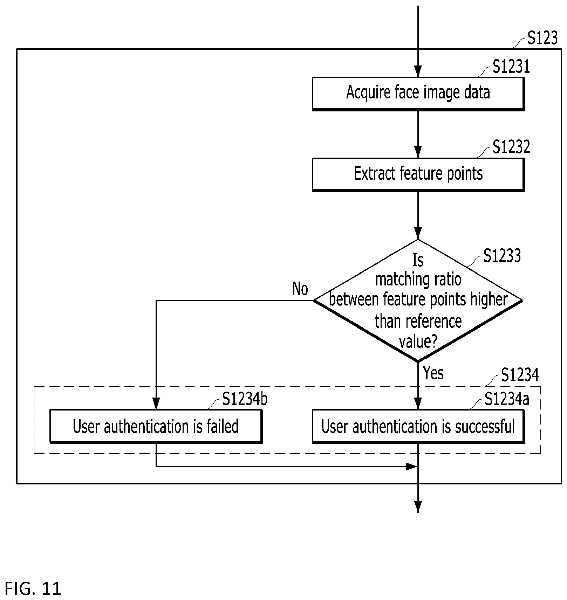

The process of performing user authentication using biometric data on the face and the iris will described in more detail with reference to FIGS. 11 to 12.

Referring to FIG. 11, when body part information of a user 1 is sensed, the multiple body part recognition device 100 performs user authentication on the face (step S123).

More specifically, when body part information of a user 1 is sensed, the multiple body part recognition device 100 acquires face image data from the user 1 (step S1231) and extracts feature points from the acquired face image data (step S1232). Then, the multiple body part recognition device 100 compares the feature points extracted from the face image data with feature points extracted from previously registered biometric data (step S1233), and determines whether the user authentication on the face is successful on the basis of a result of the comparison between the feature points (step S1234).

Accordingly, when the feature points extracted from the face image data are compared with the feature points extracted from the previously registered biometric data (step S1233) and the matching ratio of the feature points extracted from the face image data to the feature points extracted from the previously registered biometric data is equal to or higher than a preset reference value, the multiple body part recognition device 100 determines that the user authentication on the face is successful (step S1234a), and contrarily, when the matching ratio of the feature points extracted from the face image data to the feature points extracted from the previously registered biometric data is lower than the preset reference value, the multiple body part recognition device 100 determines that the user authentication on the face is failed (step S1234b).

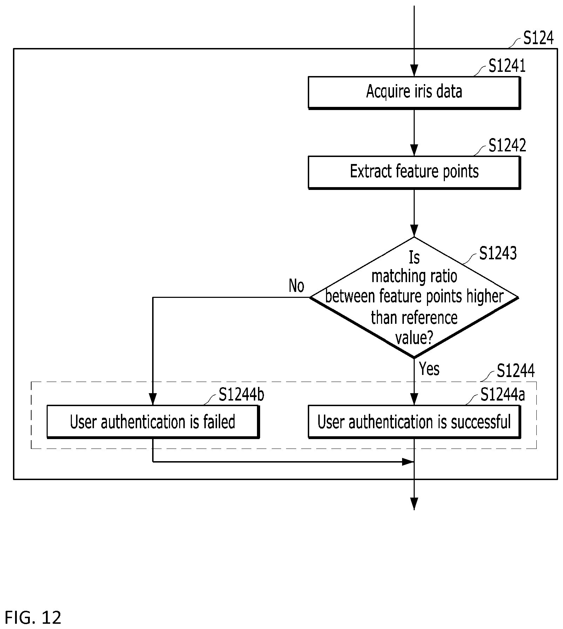

Referring to FIG. 12, when body part information of a user 1 is sensed, the multiple body part recognition device 100 performs user authentication on the iris (step S124).

More specifically, when body part information of a user 1 is sensed, the multiple body part recognition device 100 acquires iris data from the user 1 (step S1241) and extracts feature points from the acquired face image data (step S1242). Then, the multiple body part recognition device 100 compares the feature points extracted from the iris data with feature points extracted from previously registered biometric data (step S1243), and determines whether the user authentication on the iris is successful on the basis of a result of the comparison between the feature points (step S1244).

Accordingly, when the feature points extracted from the iris data are compared with the feature points extracted from the previously registered biometric data (step S1243) and the matching ratio of the feature points extracted from the iris data to the feature points extracted from the previously registered biometric data is equal to or higher than a preset reference value, the multiple body part recognition device 100 determines that the user authentication on the iris is successful (step S1244a), and contrarily, when the matching ratio of the feature points extracted from the iris data to the feature points extracted from the previously registered biometric data is lower than the preset reference value, the multiple body part recognition device 100 determines that the user authentication on the iris is failed (step S1244b).

Referring to FIG. 7 again, when the user authentication on each biometric data is completed, the multiple body part recognition device 100 integrates the result of the user authentication on each biometric data and determines the user 1 as an authenticated user when the result of user authentication on each biometric data satisfies authentication conditions set in advance (step S130).

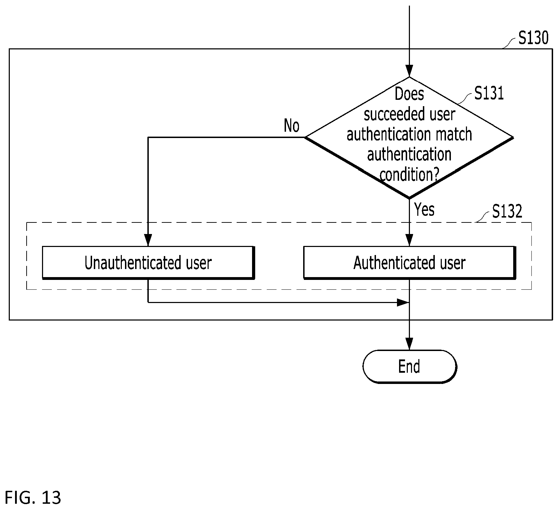

More specifically, referring to FIG. 13, when the user authentication on each biometric data is completed, the multiple body part recognition device 100 confirms whether a result of successful user authentication matches a user authentication condition set in advance (step S131).

That is, when the user authentication on each biometric data is completed, the multiple body part recognition device 100 integrates the result of the successful user authentication, and confirms whether the result matches a user authentication condition set in advance by comparing the result with the user authentication condition.

For example, the user authentication condition set in advance may be set to include various conditions such as a user authentication condition based on a piece of biometric data, a user authentication condition based on a plurality of biometric data, a user authentication condition based on a plurality of biometric data including a piece of specified biometric data, and a user authentication condition based on a plurality of biometric data including a plurality of specified biometric data.

In addition, the multiple body part recognition device 100 determines whether or not the user is authenticated according to whether a result of successful user authentication matches a user authentication condition set in advance (step S132) .

That is, when a result of successful user authentication matches a user authentication condition set in advance, the multiple body part recognition device 100 determines the user 1 as an authenticated user, and contrarily, when a result of successful user authentication does not match a user authentication condition set in advance, the multiple body part recognition device 100 determines the user 1 as an unauthenticated user.

As described above, in the embodiments of the present invention, recognition and identification of a plurality of body parts can be simultaneously performed by combining independent body part recognition techniques, and an aesthetically superior and user-friendly user interface can be provided.

In addition, time consumption or inconveniences occurring in the biometric data registration or identification process can be reduced, and psychological resistance occurring in the body part recognition process can be reduced. Particularly, as the internal devices are not shown to the user 1, while having a high biometric information recognition rate, a multiple body part recognition device 100 with reduced resistance or discomfort of the user 1 can be provided.

In addition, the probability of user identification failure can be lowered, and identification of a user 1 can be accomplished speedily as the identification of the user 1 is performed, when a biometric data is inputted from the user 1, by comparing all the biometric data acquired from the body of the user 1 with previously registered biometric data in real-time until identification of the user 1 succeeds.

The above description of the present invention is for exemplary purposes, and it can be understood by those skilled in the art that the present invention may be easily embodied in other specific forms without departing from the essential features thereof. The embodiments described above are therefore to be considered in all respects as illustrative and not restrictive. For example, each constitutional element described as an individual form may be embodied to be distributed, and in the same manner, constitutional elements described as being distributed may also be embodied in an aggregated form.

The scope of the present invention is defined by the accompanying claims, and the meaning and scope of the claims and all changes and modifications derived from equivalents thereof should be interpreted as being included in the scope of the present invention.

The modes for the embodiments of the present invention are described together in the best mode for carrying out the present invention.

### INDUSTRIAL APPLICABILITY

The present invention relates to a contactless multiple body part recognition method, and since the method can be applied to various authentication systems and has repeatability, it has industrial applicability.

## Claims

1. A contactless multiple body part recognition method by using a multiple body part recognition device (100) comprising a biometric data input unit (10) for acquiring a plurality of biometric data from a body of the user and a biometric data identification unit (20), the method comprising the steps of:
acquiring, by the multiple body part recognition device (100), a plurality of biometric data from a user in a contactless state when the user is sensed within a preset measurable range (S110), and performing user authentication on each biometric data by comparing the acquired biometric data with previously registered biometric data (S120); and
integrating, by the multiple body part recognition device (100), a result of the user authentication on each biometric data and determining the user as an authorized user when the result of the user authentication on each biometric data satisfies a condition set in advance (S130), wherein the plurality of biometric data comprises a fingerprint data acquired from the user and a palm vein data acquired from the user, and
wherein the biometric data input unit (10) comprises a first fingerprint recognition camera (111) for photographing fingerprints of a predetermined number of fingers except the thumb; a second fingerprint recognition camera (113) for photographing fingerprints of fingers that are not photographed by the first fingerprint recognition camera (111) among the fingers except the thumb; and a palm vein recognition camera (121) for acquiring palm vein data by photographing a palm of the user when the user approaches the biometric data input unit (10), and
wherein the plurality of fingerprint recognition cameras (111,113) and the palm vein recognition camera (121) are arranged in a triangular shape.

2. The method according to claim 1, wherein the step of acquiring biometric data on a fingerprint from the user and comparing the acquired biometric data with the previously registered biometric data includes the steps of:
acquiring one piece of fingerprint data from the user (S1211);
extracting feature points from the one piece of fingerprint data (S1212);
comparing the feature points extracted from the one piece of fingerprint data with feature points extracted from the previously registered biometric data in real-time (S1213); and
determining whether or not the user authentication on the fingerprint is successful on the basis of a result of the comparison between the feature points (S1213).

3. The method according to claim 2, wherein the one piece of fingerprint data is comprised of a plurality of group fingerprint information including fingerprint information from at least one or more fingers.

4. The method according to claim 3, wherein the step of comparing the feature points extracted from the one piece of fingerprint data with feature points extracted from the previously registered biometric data in real-time is set to additionally acquire one piece of fingerprint data from the user when a matching ratio of the feature points extracted from the one piece of fingerprint data to the feature points extracted from the previously registered biometric data is lower than a preset reference value.

5. The method according to claim 4, wherein the step of acquiring biometric data on the fingerprint from the user and comparing the acquired biometric data with previously registered biometric data further includes the step of comparing the number of times of additionally acquiring one piece of fingerprint data from the user with a preset number.

6. The method according to claim 5, wherein the step of determining whether or not the user authentication on the fingerprint is successful on the basis of a result of the comparison between the feature points determines that the user authentication on the fingerprint is successful when the matching ratio of the feature points extracted from the one piece of fingerprint data to the feature points extracted from the previously registered biometric data is equal to or higher than the preset reference value, and determines that the user authentication on the fingerprint is failed when the matching ratio of the feature points extracted from the one piece of fingerprint data to the feature points extracted from the previously registered biometric data is lower than the preset reference value.

7. The method according to claim 1, wherein the step of acquiring biometric data on the palm vein from the user and comparing the acquired biometric data with previously registered biometric data includes the steps of:
acquiring palm vein data from the user (S1221);
extracting feature points from the palm vein data (S1222);
comparing the feature points extracted from the palm vein data with feature points extracted from the previously registered biometric data in real-time (S1223); and
determining whether or not the user authentication on the palm vein is successful on the basis of a result of the comparison between the feature points (S1223).

8. The method according to claim 1, wherein the step of integrating a result of the user authentication on each biometric data and determining the user as an authorized user when the result of the user authentication on each biometric data satisfies an authentication condition set in advance includes the steps of:
confirming whether a result of successful user authentication matches a user authentication condition set in advance; and
determining whether or not the user is authenticated according to whether a result of successful user authentication matches a user authentication condition set in advance.

9. A multiple body part recognition device (100) comprising:
a biometric data input unit (10) for acquiring, when a user approaches, a plurality of biometric data on a fingerprint and a palm vein from a body of the user while the body of the user is in a contactless state; and
a biometric data identification unit (20) for performing user authentication by comparing the plurality of biometric data acquired from the biometric data input unit (10) with previously registered biometric data, and
wherein the multiple body part recognition device (100) is adapted to integrate a result of the user authentication on each biometric data and determining the user as an authorized user when the result of the user authentication on each biometric data satisfies a condition set in advance (S130), and wherein the biometric data input unit (10) comprises a first fingerprint recognition camera (111) for photographing fingerprints of a predetermined number of fingers except the thumb; a second fingerprint recognition camera (113) for photographing fingerprints of fingers that are not photographed by the first fingerprint recognition camera (111) among the fingers except the thumb; and a palm vein recognition camera (121) for acquiring palm vein data by photographing a palm of the user when the user approaches the biometric data input unit (10), and
wherein the plurality of fingerprint recognition cameras (111,113) and the palm vein recognition camera (121) are arranged in a triangular shape.

10. The device according to claim 9, wherein in authenticating the biometric data on the fingerprint, the biometric data input unit (10) transmits the biometric data on the fingerprint acquired from the body of the user to the biometric data identification unit (20) in real-time until the biometric data on the fingerprint is authenticated by the biometric data identification unit (20).

11. The device according to claim 9, further comprising:
a biometric data registration unit (30) in which biometric data are stored in advance;
an ID display unit (40) for displaying a result of identification of the biometric data identification unit (20) as an ID;
a control unit (50) for controlling the biometric data input unit (10), the biometric data identification unit (20), the biometric data registration unit (30), and the ID display unit; and
an accommodation unit (70) for accommodating the biometric data input unit (10), the biometric data identification unit (20), the biometric data registration unit (30), the ID display unit, and the control unit therein.

## Patentansprüche

1. Kontaktloses Verfahren zur Erkennung mehrerer Körperteile durch Verwenden einer Vorrichtung (100) zur Erkennung mehrerer Körperteile, die eine Eingabeeinheit (10) für biometrische Daten zum Gewinnen einer Vielzahl von biometrischen Daten von einem Körper des Benutzers und eine Identifikationseinheit (20) für biometrische Daten umfasst, wobei das Verfahren die Schritte umfasst:
Gewinnen, durch die Vorrichtung (100) zur Erkennung mehrerer Körperteile, einer Vielzahl von biometrischen Daten von einem Benutzer in einem kontaktlosen Zustand, wenn der Benutzer innerhalb eines voreingestellten messbaren Bereichs erfasst wird (S110), und Durchführen einer Benutzerauthentifizierung über alle biometrischen Daten durch Vergleichen der gewonnenen biometrischen Daten mit zuvor registrierten biometrischen Daten (S120); und
Integrieren, durch die Vorrichtung (100) zur Erkennung mehrerer Körperteile, eines Ergebnisses der Benutzerauthentifizierung über alle biometrischen Daten und Bestimmen des Benutzers als einen autorisierten Benutzer, wenn das Ergebnis der Benutzerauthentifizierung über alle biometrischen Daten eine im Vorhinein gesetzte Bedingung erfüllt (S130),
wobei die Vielzahl von biometrischen Daten von dem Benutzer gewonnene Fingerabdruckdaten und von dem Benutzer gewonnene Handflächenvenendaten umfasst, und
wobei die Eingabeeinheit (10) für biometrische Daten eine erste Fingerabdruckerkennungskamera (111) zum Fotografieren von Fingerabdrücken einer vorbestimmten Anzahl von Fingern außer dem Daumen; eine zweite Fingerabdruckerkennungskamera (113) zum Fotografieren von Fingerabdrücken von Fingern, die nicht von der ersten Fingerabdruckerkennungskamera (111) fotografiert wurden, unter den Fingern außer dem Daumen; und eine Handflächenvenenerkennungskamera (121) zum Gewinnen von Handflächenvenendaten durch Fotografieren einer Handfläche des Benutzers umfasst, wenn der Benutzer sich der Eingabeeinheit (10) für biometrische Daten nähert, und
wobei die Vielzahl von Fingerabdruckerkennungskameras (111, 113) und die Handflächenvenenerkennungskamera (121) in einer Dreiecksform angeordnet sind.

2. Verfahren nach Anspruch 1, wobei der Schritt des Gewinnens von biometrischen Daten über einen Fingerabdruck des Benutzers und des Vergleichens der gewonnenen biometrischen Daten mit den zuvor registrierten biometrischen Daten die Schritte umfasst:
Gewinnen eines Stücks von Fingerabdruckdaten von dem Benutzer (S1211);
Extrahieren von Merkmalspunkten aus dem einen Stück von Fingerabdruckdaten (S1212);
Vergleichen der aus dem einen Stück von Fingerabdruckdaten extrahierten Merkmalspunkte mit aus den zuvor registrierten biometrischen Daten extrahierten Merkmalspunkten in Echtzeit (S1213); und
Bestimmen, ob die Benutzerauthentifizierung über den Fingerabdruck erfolgreich ist oder nicht, auf der Basis eines Ergebnisses des Vergleichs zwischen den Merkmalspunkten (S1213).

3. Verfahren nach Anspruch 2, wobei das eine Stück von Fingerabdruckdaten aus einer Vielzahl von Gruppenfingerabdruckinformationen besteht, die Fingerabdruckinformationen von wenigstens einem oder mehreren Fingern umfassen.

4. Verfahren nach Anspruch 3, wobei der Schritt des Vergleichens der aus dem einen Stück von Fingerabdruckdaten extrahierten Merkmalspunkte mit aus den zuvor registrierten biometrischen Daten extrahierten Merkmalspunkten in Echtzeit derart eingestellt ist, dass zusätzlich ein Stück von Fingerabdruckdaten von dem Benutzer gewonnen wird, wenn ein Übereinstimmungsverhältnis zwischen den aus dem einen Stück von Fingerabdruckdaten extrahierten Merkmalspunkten und den aus den zuvor registrierten biometrischen Daten extrahierten Merkmalspunkten niedriger ist als ein voreingestellter Referenzwert.

5. Verfahren nach Anspruch 4, wobei der Schritt des Gewinnens von biometrischen Daten über den Fingerabdruck von dem Benutzer und des Vergleichens der gewonnenen biometrischen Daten mit zuvor registrierten biometrischen Daten ferner den Schritt des Vergleichens der Anzahl von Malen des zusätzlichen Gewinnens eines Stücks von Fingerabdruckdaten von dem Benutzer mit einer voreingestellten Anzahl umfasst.

6. Verfahren nach Anspruch 5, wobei der Schritt des Bestimmens, ob die Benutzerauthentifizierung über den Fingerabdruck erfolgreich ist oder nicht, auf der Basis eines Ergebnisses des Vergleichs zwischen den Merkmalspunkten bestimmt, dass die Benutzerauthentifizierung über den Fingerabdruck erfolgreich ist, wenn das Übereinstimmungsverhältnis zwischen den aus dem einen Stück von Fingerabdruckdaten extrahierten Merkmalspunkten und den aus den zuvor registrierten biometrischen Daten extrahierten Merkmalspunkten gleich oder höher ist als der voreingestellte Referenzwert, und bestimmt, dass die Benutzerauthentifizierung über den Fingerabdruck fehlgeschlagen ist, wenn das Übereinstimmungsverhältnis zwischen den aus dem einen Stück von Fingerabdruckdaten extrahierten Merkmalspunkten und den aus den zuvor registrierten biometrischen Daten extrahierten Merkmalspunkten niedriger ist als der voreingestellte Referenzwert.

7. Verfahren nach Anspruch 1, wobei der Schritt des Gewinnens von biometrischen Daten über die Handflächenvene von dem Benutzer und des Vergleichens der gewonnenen biometrischen Daten mit zuvor registrierten biometrischen Daten die Schritte umfasst:
Gewinnen von Handflächenvenendaten von dem Benutzer (S1221);
Extrahieren von Merkmalspunkten von den Handflächenvenendaten (S1222);
Vergleichen der aus den Handflächenvenendaten extrahierten Merkmalspunkte mit aus den zuvor registrierten biometrischen Daten extrahierten Merkmalspunkten in Echtzeit (S1223); und
Bestimmen, ob die Benutzerauthentifizierung über die Handflächenvene erfolgreich ist oder nicht, auf der Basis eines Ergebnisses des Vergleichs zwischen den Merkmalspunkten (S1223).

8. Verfahren nach Anspruch 1, wobei der Schritt des Integrierens eines Ergebnisses der Benutzerauthentifizierung über alle biometrischen Daten und des Bestimmens des Benutzers als einen autorisierten Benutzer, wenn das Ergebnis der Benutzerauthentifizierung über alle biometrischen Daten eine im Vorhinein gesetzte Authentifizierungsbedingung erfüllt, die Schritte umfasst:
Bestätigen, ob ein Ergebnis erfolgreicher Benutzerauthentifizierung mit einer im Vorhinein gesetzten Authentifizierungsbedingung übereinstimmt; und
Bestimmen, ob der Benutzer authentifiziert ist oder nicht, je nachdem, ob ein Ergebnis einer erfolgreichen Benutzerauthentifizierung mit einer im Vorhinein gesetzten Authentifizierungsbedingung übereinstimmt.

9. Vorrichtung (100) zur Erkennung mehrerer Körperteile umfassend:
eine Eingabeeinheit (10) für biometrische Daten zum Gewinnen, wenn sich ein Benutzer nähert, einer Vielzahl von biometrischen Daten über einen Fingerabdruck und eine Handflächenvene von einem Körper des Benutzers, während sich der Körper des Benutzers in einem kontaktlosen Zustand befindet; und
eine Identifikationseinheit (20) für biometrische Daten zum Durchführen einer Benutzerauthentifizierung durch Vergleichen der Vielzahl von durch die Eingabeeinheit (10) für biometrische Daten gewonnenen biometrischen Daten mit zuvor registrierten biometrischen Daten, und
wobei die Vorrichtung (100) zur Erkennung mehrerer Körperteile dazu ausgelegt ist, ein Ergebnis der Benutzerauthentifizierung für alle biometrischen Daten zu integrieren und den Benutzer als einen autorisierten Benutzer zu bestimmen, wenn das Ergebnis der Benutzerauthentifizierung über alle biometrischen Daten eine im Vorhinein gesetzte Bedingung erfüllt (S130); und
wobei die Eingabeeinheit (10) für biometrische Daten eine erste Fingerabdruckerkennungskamera (111) zum Fotografieren von Fingerabdrücken einer vorbestimmten Anzahl von Fingern außer dem Daumen; eine zweite Fingerabdruckerkennungskamera (113) zum Fotografieren von Fingerabdrücken von Fingern, die nicht von der ersten Fingerabdruckerkennungskamera (111) fotografiert wurden, unter den Fingern außer dem Daumen; und eine Handflächenvenenerkennungskamera (121) zum Gewinnen von Handflächenvenendaten durch Fotografieren einer Handfläche des Benutzers umfasst, wenn der Benutzer sich der Eingabeeinheit (10) für biometrische Daten nähert, und
wobei die Vielzahl von Fingerabdruckerkennungskameras (111, 113) und die Handflächenvenenerkennungskamera (121) in einer Dreiecksform angeordnet sind.

10. Vorrichtung nach Anspruch 9, wobei die Eingabeeinheit (10) für biometrische Daten beim Authentifizieren der biometrischen Daten über den Fingerabdruck die vom Körper des Benutzers gewonnenen biometrischen Daten über den Fingerabdruck an die Identifikationseinheit (20) für biometrische Daten in Echtzeit überträgt, bis die biometrischen Daten über den Fingerabdruck durch die Identifikationseinheit (20) für biometrische Daten authentifiziert sind.

11. Vorrichtung nach Anspruch 9, ferner umfassend:
eine Registrierungseinheit (30) für biometrische Daten, in der biometrische Daten im Vorhinein gespeichert sind;
eine ID-Anzeigeeinheit (40) zum Anzeigen eines Identifikationsergebnisses der Identifikationseinheit (20) für biometrische Daten als eine ID;
eine Steuereinheit (50) zum Steuern der Eingabeeinheit (10) für biometrische Daten, der Identifikationseinheit (20) für biometrische Daten, der Registrierungseinheit (30) für biometrische Daten und der ID-Anzeigeeinheit; und
eine Aufnahmeeinheit (70) zum Aufnehmen der Eingabeeinheit (10) für biometrische Daten, der Identifikationseinheit (20) für biometrische Daten, der Registrierungseinheit (30) für biometrische Daten, der ID-Anzeigeeinheit und der Steuereinheit darin.

## Revendications

1. Procédé de reconnaissance sans contact de multiples parties du corps en utilisant un dispositif de reconnaissance de multiples parties du corps (100) comprenant une unité d'entrée de données biométriques (10) pour l'acquisition d'une pluralité de données biométriques à partir du corps d'un utilisateur et une unité d'identification des données biométriques (20), le procédé comprenant les étapes de :
l'acquisition, par le dispositif de reconnaissance de multiples parties du corps (100), d'une pluralité de données biométriques auprès d'un utilisateur dans un état sans contact quand l'utilisateur est détecté à l'intérieur d'une portée mesurable préréglée (S110) et la réalisation de l'authentification de l'utilisateur sur chaque donnée biométrique en comparant les données biométriques acquises avec les données biométriques précédemment enregistrées (S120) et
l'intégration, par le dispositif de reconnaissance des multiples parties du corps (100), d'un résultat de l'authentification de l'utilisateur sur chaque donnée biométrique et la détermination de l'utilisateur comme un utilisateur autorisé quand le résultat de l'authentification de l'utilisateur sur chaque donnée biométrique satisfait une condition réglée à l'avance (S130),
où la pluralité des données biométriques comprend des données d'empreinte digitale acquises auprès de l'utilisateur et des données de veines palmaires acquises auprès de l'utilisateur et
où l'unité d'entrée de données biométriques (10) comprend un premier appareil photo de reconnaissance d'empreinte digitale (111) pour photographier les empreintes digitales d'un nombre prédéterminé de doigts à l'exception du pouce, un deuxième appareil photo de reconnaissance des empreintes digitales (113) pour photographier les empreintes digitales des doigts qui ne sont pas photographiées par le premier appareil photo de reconnaissance des empreintes digitales (111) parmi les doigts à l'exception du pouce et un appareil photo de reconnaissance des veines palmaires (121) pour l'acquisition des données de veines palmaires en photographiant la paume de l'utilisateur quand l'utilisateur approche de l'unité d'entrée des données biométriques (10), et
où la pluralité des appareils photo de reconnaissance des empreintes digitales (111, 113) et l'appareil photo de reconnaissances des veines palmaires (121) sont disposées selon une forme triangulaire.

2. Procédé selon la revendication 1, **caractérisé en ce que** l'étape d'acquisition des données biométriques sur une empreinte digitale auprès de l'utilisateur et la comparaison des données biométriques acquises avec les données biométriques précédemment acquises inclut les étapes de :
l'acquisition d'une partie des données d'empreinte digitale auprès de l'utilisateur (S1211),
l'extraction de points caractéristiques à partir d'une partie des données d'empreinte digitale (S1212),
la comparaison des points caractéristiques extraits de la partie des données d'empreinte digitale avec des points caractéristiques extraits des données biométriques précédemment enregistrées en temps réel (S1213) et
la détermination de la réussite ou non de l'authentification de l'utilisateur sur l'empreinte digitale sur la base du résultat d'une comparaison entre les points caractéristiques (S1213).

3. Procédé selon la revendication 2, **caractérisé en ce que** l'une partie des données d'empreinte digitale est composée d'une pluralité d'information de groupe d'empreintes digitales incluant l'information d'empreintes digitales à partir d'au moins un doigt ou plus.

4. Procédé selon la revendication 3, **caractérisé en ce que** l'étape de comparaison des points caractéristiques extraits de l'une partie des données d'empreintes digitales avec les points caractéristiques extraits des données biométriques précédemment enregistrées en temps réel est réglée pour acquérir de manière supplémentaire une partie des données d'empreintes digitales auprès de l'utilisateur quand un rapport de correspondance entre les points caractéristiques extraits auprès d'une partie des données d'empreintes digitales et les points caractéristiques extraits des données biométriques précédemment enregistrées est inférieur à une valeur de référence préréglée.

5. Procédé selon la revendication 4, **caractérisé en ce que** l'étape d'acquisition des données biométriques sur les empreintes digitales auprès de l'utilisateur et la comparaison des données biométriques acquises avec les données biométriques précédemment enregistrées inclut en outre l'étape de comparaison du nombre de fois où il y a acquisition supplémentaire d'une partie des données d'empreintes digitales auprès de l'utilisateur avec un nombre préréglé.

6. Procédé selon la revendication 5, **caractérisé en ce que** l'étape de détermination de la réussite ou non de l'authentification de l'utilisateur sur l'empreinte digitale sur la base d'un résultat de la comparaison entre les points caractéristiques détermine que l'authentification de l'utilisateur sur les empreintes digitales est réussie quand le rapport de correspondance entre les points caractéristiques extraits d'une partie des données d'empreintes digitales et les points caractéristiques extraits des données biométriques précédemment enregistrées est égal ou supérieur à la valeur de référence préréglée et détermine que l'authentification de l'utilisateur sur l'empreinte digitale est ratée quand le rapport de correspondance entre les points caractéristiques extraits d'une partie des données d'empreintes digitales et les points caractéristiques extraits des données biométriques précédemment enregistrées est inférieur à la valeur de référence préréglée.

7. Procédé selon la revendication 1, **caractérisé en ce que** l'étape d'acquisition des données biométriques sur les veines palmaires auprès de l'utilisateur et de comparaison des données biométriques acquises avec les données biométriques précédemment enregistrées inclut les étapes de :
acquérir des données de veines palmaires auprès de l'utilisateur (S1221),
extraire des points caractéristiques des données de veines palmaires (S1222),
comparer les points caractéristiques extraits des données de veines palmaires avec les points caractéristiques extraits des données biométriques précédemment enregistrées en temps réel (S1223) et
déterminer si l'authentification de l'utilisateur sur les veines palmaires est réussie ou non sur la base d'un résultat de comparaison entre les points caractéristiques (S1223).

8. Procédé selon la revendication 1, **caractérisé en ce que** l'étape d'intégration d'un résultat de l'authentification de l'utilisateur sur chaque donnée biométrique et de détermination de l'utilisateur comme utilisateur autorisé quand le résultat de l'authentification de l'utilisateur sur chacune des données biométriques satisfait une condition d'authentification réglée en avance inclut les étapes de :
confirmer si un résultat d'authentification réussie de l'utilisateur correspond à une condition d'authentification de l'utilisateur réglée à l'avance et
déterminer si l'utilisateur est authentifié ou non selon la réussite ou non d'un résultat d'authentification de l'utilisateur correspond à une condition d'authentification de l'utilisateur réglée à l'avance.

9. Dispositif de reconnaissance de multiples parties du corps (100) comprenant :
une unité d'entrée de données biométriques (10) pour acquérir, quand un utilisateur approche, une pluralité de données biométriques sur une empreinte digitale et une veine palmaire à partir d'un corps de l'utilisateur pendant que le corps de l'utilisateur est dans un état sans contact et
une unité d'identification de données biométriques (20) pour réaliser l'authentification de l'utilisateur en comparant la pluralité de données biométriques acquises auprès de l'unité d'entrée de données biométriques (10) avec des données biométriques précédemment enregistrées et
où le dispositif de reconnaissance de multiples parties du corps (100) est adapté à intégrer un résultat de l'authentification de l'utilisateur sur chacune des données biométriques et déterminer l'utilisateur comme un utilisateur autorisé quand le résultat de l'authentification de l'utilisateur sur chacune des données biométriques satisfait une condition réglée à l'avance (S130) et
où l'unité d'entrée de données biométriques (10) comprend un premier appareil photo de reconnaissance d'empreinte digitale (111) pour photographier les empreintes digitales d'un nombre prédéterminé de doigts à l'exception du pouce, un deuxième appareil photo de reconnaissance d'empreinte digitale (113) pour photographier les empreintes digitales des doigts qui ne sont pas photographié par le premier appareil photo de reconnaissance d'empreintes digitales (111) parmi les doigts à l'exception du pouce et un appareil photo de reconnaissance de veines palmaires (121) pour acquérir des données de veines palmaires en photographiant la paume de l'utilisateur quand l'utilisateur approche de l'unité d'entrée de données biométriques (10) et
où la pluralité des appareils photo de reconnaissance d'empreinte digitale (111, 113) et l'appareil photo de reconnaissance de veines palmaires (121) sont disposés en forme triangulaire.

10. Dispositif selon la revendication 9, **caractérisé en ce que** l'authentification des données biométriques sur l'empreinte digitale, l'unité d'entrée de données biométriques (10) transmet les données biométriques sur l'empreinte digitale acquise auprès du corps de l'utilisateur à l'unité d'identification des données biométriques (20) en temps réel jusqu'à ce que les données biométriques sur l'empreinte digitale soit authentifiée par l'unité d'identification de données biométriques (20).

11. Dispositif selon la revendication 9, comprenant en outre :
une unité d'enregistrement des données biométriques (30) dans laquelle les données biométriques sont stockées à l'avance,
une unité d'affichage de l'identité (40) pour afficher un résultat d'identification de l'unité d'identification des données biométriques (20) comme identité,
une unité de commande (50) pour commander l'unité d'entrée des données biométriques (10), l'unité d'identification biométrique (20) l'unité d'enregistrement de données biométriques (30) et l'unité d'affichage de l'identité et
une unité d'accueil (70) pour accueillir l'unité d'entrée des données biométriques (10), l'unité d'identification des données biométriques (20), l'unité d'enregistrement des données biométriques (30), l'unité d'affichage de l'identité et l'unité de commande à l'intérieur.
